# EUROPEAN PATENT APPLICATION

(11) **EP 2 426 595 A2**
(43) Date of publication of application: **07.03.2012**
(21) Application number: 11180244.3
(22) Date of filing: 06.09.2011
(51) Int. Cl.: G06F 3/12

(54) **Image forming system and storage medium**

(30) Priority: 06.09.2010 JP 2010198926
(71) Applicant: Ricoh Company, Ltd., Tokyo 143-8555 (JP)
(72) Inventor: Ikeura, Ryuichi, Tokyo 143-8555 (JP)
(74) Representative: White, Duncan Rohan

(57) **Abstract**

An image forming system includes a smart device (20), a server (30), and an image forming apparatus (10). The server (30) receives print client information from the smart device (20), advertises the print client information to the image forming apparatus (10), receives a print job from the smart device (20), and registers the print job in association with the print client information. The image forming apparatus (10) receives the print client information advertised by the server (30), displays a first operation component associated with a print client identifier obtained from the print client information, obtains print job information of the print job from the server (30) based on the print client identifier when the first operation component is selected, displays a second operation component associated with the print job information, obtains the print job from the server (30) based on the print job information when the second operation component is selected, and executes the print job.

## Description

An aspect of this disclosure relates to an image forming system, a server, an image forming apparatus, and a storage medium.

In recent years, portable information processing terminals (hereafter called smart devices) have become widely used. A smart device can be connected to a network in an office via, for example, a wireless network. Therefore, like a personal computer connected to the network, a smart device can print a document (an image or so on) using a printing apparatus (e.g., a printer) on the network (see, for example, Japanese Laid-Open Patent Publication No. 2008-293502).

For example, when printing from a smart device, an application such as a print widget is started on the smart device, a document (or any object) to be printed is selected, printing options are set, and then a print request is transmitted.

In such a smart device, the print widget needs to be kept active until the printing is completed even after the print request is transmitted. Here, unlike a high-capacity information processing apparatus such as a personal computer, it is generally difficult to run an application in the background on a smart device due to its limited capacity and operational constraints.

Meanwhile, for a user of the smart device, it is desirable to terminate the print widget (or application) at least after selecting a document and printing options and transmitting a print request and to start another application to perform a different task or job. However, a print widget is typically configured to remove a generated print job(s) when the print widget is terminated. Therefore, with a related-art configuration, it is necessary to keep the print widget (or any application for printing) active until the printing is completed.

### SUMMARY OF THE INVENTION

In an aspect of this disclosure, there is provided an image forming system including a smart device, a server, and an image forming apparatus that are connected to each other via a network. The server includes a print client information receiving unit configured to receive print client information from a print application of the smart device, a print client information management unit configured to register and manage the received print client information, an advertising unit configured to advertise the registered print client information to the image forming apparatus, a print job receiving unit configured to receive a print job from the print application of the smart device, a print job management unit configured to register and manage the received print job in association with the print client information, and a print job transmission unit configured to transmit the print job to the image forming apparatus in response to a request from the image forming apparatus. The image forming apparatus includes a display unit, a receiving unit configured to receive the print client information advertised by the advertising unit of the server, a management unit configured to obtain a print client identifier from the received print client information and to register and manage the obtained print client identifier, a first display control unit configured to display a first operation component associated with the registered print client identifier on the display unit, a print job information obtaining unit configured to obtain print job information of the print job from the server based on the print client identifier associated with the first operation component when the first operation component is selected, a second display control unit configured to display a second operation component associated with the obtained print job information on the display unit, a print job obtaining unit configured to obtain the print job from the server based on the print job information associated with the second operation component when the second operation component is selected, and a print execution unit configured to execute the obtained print job.

### BRIEF DESCRIPTION OF THE DRAWINGS

FIG. 1 is a drawing illustrating an exemplary configuration of a network according to an embodiment;
FIG. 2 is a block diagram illustrating an exemplary hardware configuration of an image forming apparatus according to an embodiment;
FIG. 3 is a block diagram illustrating an exemplary hardware configuration of a user device according to an embodiment;
FIG. 4 is a drawing illustrating exemplary functional configurations of an image forming apparatus, a user device, and a server constituting an image forming system;
FIG. 5A is a drawing illustrating an exemplary configuration of a print client information registration request;
FIG. 5B is a drawing illustrating an exemplary configuration of a print client information registration response;
FIG. 6 is a drawing used to describe an exemplary method of generating a print client ID;
FIG. 7 is a flowchart illustrating a process of generating and transmitting a print job;
FIG. 8 is a drawing used to describe an exemplary method of selecting a document file;
FIG. 9 is a drawing illustrating an exemplary print setting screen;
FIG. 10A is a drawing illustrating an exemplary configuration of a print job registration request;
FIG. 10B is a drawing illustrating an exemplary configuration of a print job registration response;
FIG. 11 is a drawing illustrating print jobs associated with print clients;
FIG. 12 is a drawing illustrating exemplary formats of URIs;
FIG. 13 is a sequence chart illustrating a process performed between a print client and a print job agent;
FIG. 14 is a sequence chart showing an exemplary process of registering print client information in an image forming apparatus;
FIG. 15 is a table illustrating an exemplary configuration of a user management table;
FIG. 16 is a sequence chart illustrating a process of displaying a list of print jobs available for a user;
FIG. 17 is a drawing illustrating an exemplary user selection screen;
FIG. 18 is a drawing illustrating an exemplary print job selection screen;
FIG. 19 is a sequence chart illustrating a process of executing a print job; and
FIG. 20 is a sequence chart illustrating a process performed between a print job agent and a printing apparatus.

### DESCRIPTION OF THE PREFERRED EMBODIMENTS

Preferred embodiments of the present invention are described below with reference to the accompanying drawings.

### <SYSTEM CONFIGURATION>

### (NETWORK CONFIGURATION)

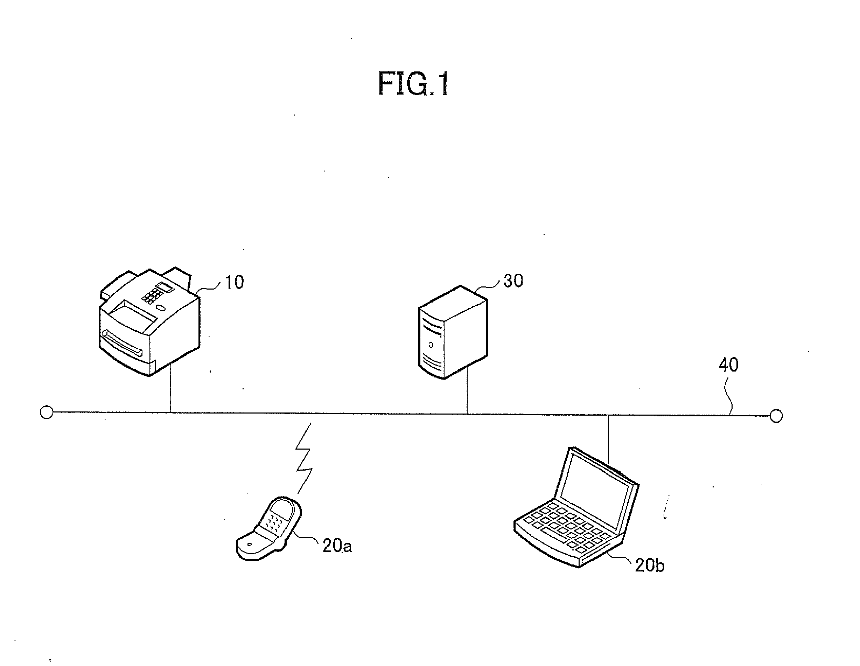

An exemplary configuration of a network according to an embodiment is described below. FIG. 1 is a drawing illustrating an exemplary network configuration. In the exemplary network configuration of FIG. 1, at least one image forming apparatus 10, one or more user devices 20, and a server 30 are connected via a (wired or wireless) network 40 such as a local area network (LAN).

The image forming apparatus 10 is, for example, a printing apparatus including functions of a copier, a scanner, a printer, and a facsimile machine. In FIG. 1, a smart device 20a and a personal computer (PC) 20b are provided as examples of the user devices 20. Each user device 20 functions as a print client and includes an application program (e.g., a print widget client) that provides a printing service in cooperation with the image forming apparatus 10. The server 30 receives and relays a print request sent from the user device 20. The server 30 functions as a print agent (or a widget manager) and intermediates between the user device 20 including an application program (i.e., a print widget client) and the image forming apparatus 10 that performs printing.

### (HARDWARE)

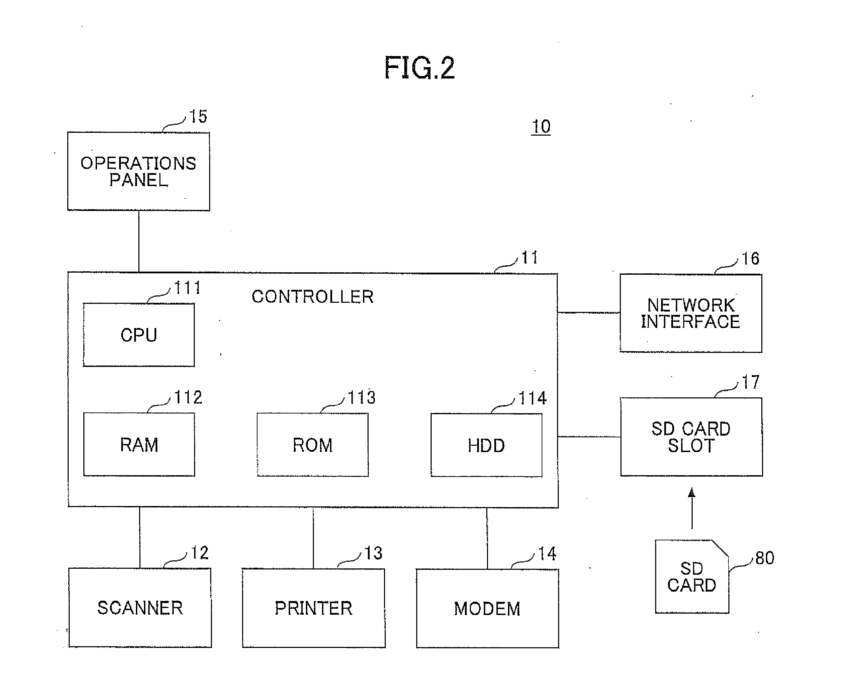

Hardware configurations of the image forming apparatus 10 and the user device 20 are described below. FIG. 2 is a block diagram illustrating an exemplary hardware configuration of the image forming apparatus 10 of this embodiment. As illustrated in FIG. 2, the image forming apparatus 10 may include, as hardware components, a controller 11, a scanner 12, a printer 13, a modem 14, an operations panel 15, a network interface 16, and an SD card slot 17.

The controller 11 includes a CPU 111, a RAM 112, a ROM 113, and an HDD 114. The ROM 113 stores, for example, programs and data used by the programs. The RAM 112 is used, for example, as a storage area into which programs are loaded and as a work area for the loaded programs. The CPU 111 executes the programs loaded into the RAM 112 to implement various functions. The HDD 114 stores, for example, programs and data used by the programs.

The scanner 12 is hardware for scanning a document to obtain image data. The printer 13 is hardware for printing print data on a recording medium such as paper. The modem 14 is hardware for connecting the image forming apparatus 10 to a telephone line and is used to send and receive image data for facsimile communications. The operations panel 15 is hardware including an input unit such as buttons for receiving user inputs and a display unit such as a liquid crystal display panel. The network interface 16 is hardware for connecting the image forming apparatus 10 to a (wired or wireless) network such as a LAN. The SD card slot 17 reads, for example, programs stored in an SD card 80. Thus, with the image forming apparatus 10 of this embodiment, in addition to the programs stored in the ROM 113, programs stored in the SD card 80 can be loaded into the RAM 112 and executed.

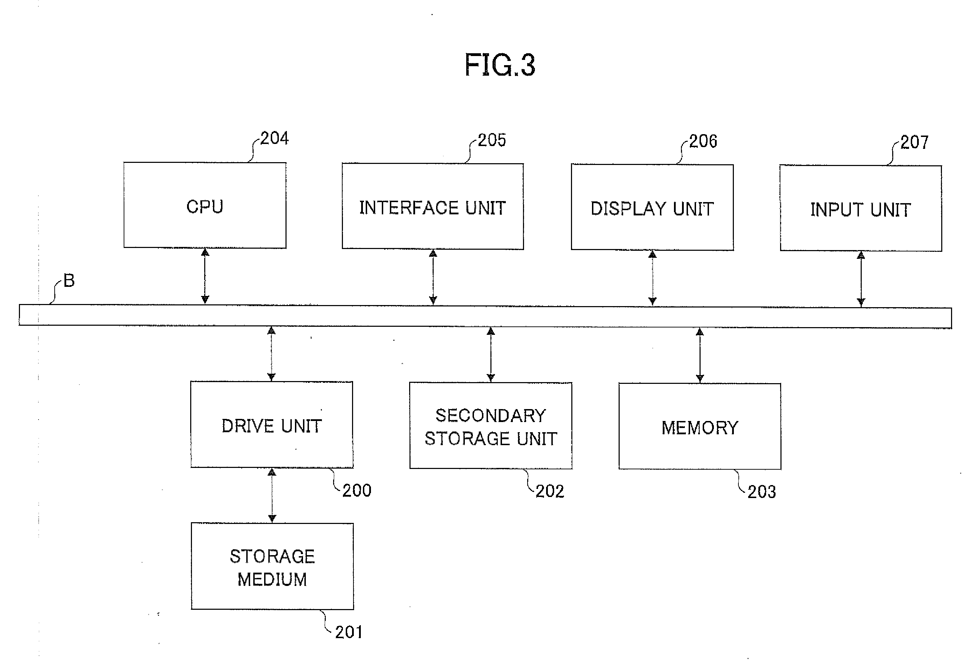

FIG. 3 is a block diagram illustrating an exemplary hardware configuration of the user device 20 of this embodiment. As illustrated in FIG. 3, the user device 20 may include, as hardware components, a drive unit 200, a secondary storage unit 202, a memory 203, a CPU 204, an interface unit 205, a display unit 206, and an input unit 207 that are connected to each other via a bus B.

Programs for performing various processes at the user device 20 may be provided via a storage medium 201 such as a CD-ROM, a DVD-ROM, or a USB memory. When the storage medium 201 storing programs is mounted on the drive unit 200, the programs are read by the drive unit 200 from the storage medium 201 and are installed in the secondary storage unit 202. The programs may not necessarily be installed from the storage medium 201, but may instead be downloaded via a network from another computer. The secondary storage unit 202 stores the installed programs and other necessary files and data.

The memory 203 temporarily stores programs retrieved from the secondary storage unit 202 when the programs are executed. The CPU 204 implements functions of the user device 20 according to the programs temporarily stored in the memory 203. The interface unit 205 connects the user device 20 to a network. The display unit 206 displays, for example, graphical user interfaces (GUI) output by the programs. The input unit 207 includes, for example, a keyboard and a mouse for receiving user inputs.

Although detailed descriptions are omitted, the server 30 may also be implemented by a computer including a CPU, a memory, a storage unit, and a network interface.

Here, for descriptive purposes, it is assumed that the above described hardware configuration of the user device 20 applies both to the smart device 20a and the PC 20b. However, in practice, the hardware configurations of the smart device 20a and the PC 20b may be different from each other and their hardware components may have different capacities.

### (FUNCTIONS)

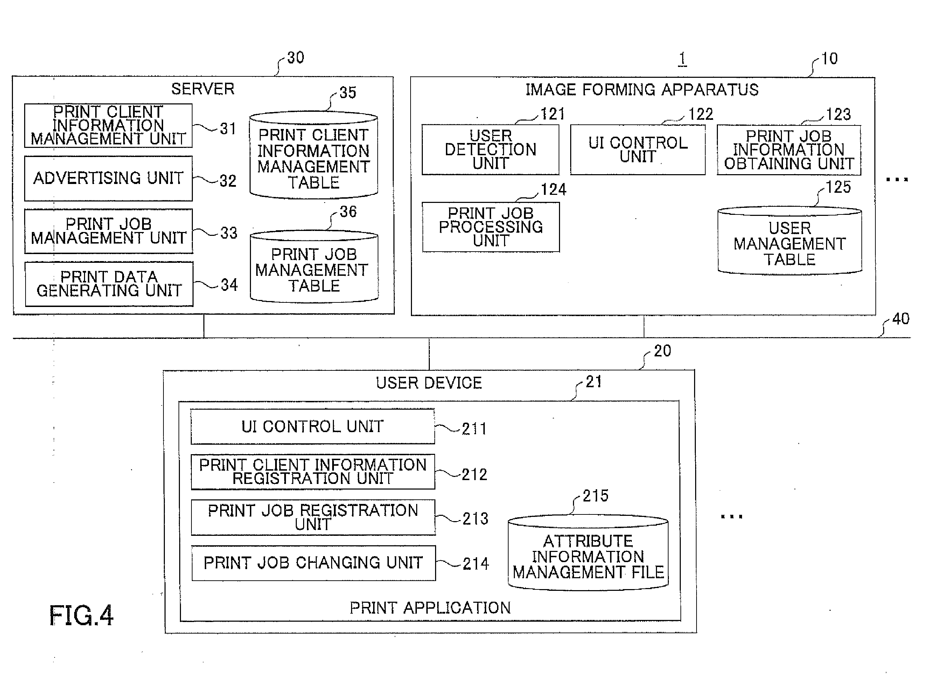

FIG. 4 is a drawing illustrating exemplary functional configurations of the image forming apparatus, the user device 20, and the server 30 constituting an image forming system 1 of this embodiment.

The user device 20 includes a print application (print widget client) 21 as an example of an application program for printing. The print application 21 is a print widget that requests the image forming apparatus 10 via the network 40 to execute a print job or requests the server 30 to register a print job. The print application 21 includes a UI control unit 211, a print client information registration unit 212, a print job registration unit 213, a print job changing unit 214, and an attribute information management file 215.

The UI control unit 211 displays various screens related to the print application 21 on, for example, the display unit 206 of the user device 20.

When the print application 21 is started on the user device 20, the print client information registration unit 212 transmits print client information to the server 30 and requests the server 30 to register the print client information. The print client information includes an identifier of a print client. In this embodiment, instead of the respective user devices 20, respective users are identified as print clients. Therefore, the print client information registration unit 212 transmits print client information including, for example, a user name and a password to the server 30.

The print job registration unit 213 transmits a print job to the server 30 according to user operations on the print application 21 and requests the server 30 to register the print job. The print job may include printing parameters (printing options) and print data.

The print job changing unit 214 changes (or modifies) the print job registered in the server 30 (i.e., requests the server 30 to change the print job). For example, to change a printing parameter in the print job, the print job changing unit 214 transmits the printing parameter that has been changed according to user operations on the print application 21 and requests the server 30 to change the printing parameter. Changing a registered print job may indicate the removal of the registered print job. The print job changing unit 214 can also request the server 30 to remove a registered print job according to user operations on the print application 21.

The attribute information management file 215 contains attribute information of the print application 21. The attribute information may include, for example, an identifier (application ID) of the print application 21 and default values of printing parameters (printing options).

The server 30 may be implemented by a computer and may include a print client information management unit 31, an advertising unit 32, a print job management unit 33, a print data generating unit 34, a print client information management table 35, and a print job management table 36.

The print client information management unit 31 receives a request to register print client information from the user device 20 and stores the print client information in the print client information management table 35. The print client information management unit 31 may correspond to a print client information receiving unit and a print client information management unit. The print client information management table 35 is stored, for example, in a storage unit of the server 30.

The advertising unit 32 advertises (broadcasts or multicasts) the print client information received by the print client information management unit 31 on the network 40. In this embodiment, the advertisement is performed once for each user (each user ID). For example, even if print client information of user A is newly received after the print client information of user A is advertised, the advertisement of the print client information is not performed again. This is because advertisement of the print client information is performed by the advertising unit 32 to report to the image forming apparatus 10 new entry of a user allowed to use the print application 21. Alternatively, the advertisement may be performed every time print client information is received. In this case, the image forming apparatus 10 may be configured to remove duplicate advertisements issued for the same user.

The print job management unit 33 receives a request to register a print job from the user device 20 and stores the print job in the print job management table 36. The print job management unit 33 may correspond to a print job receiving unit and a print job management unit. The print job management table 36 is stored, for example, in a storage unit of the server 30.

The print data generating unit 34 generates print data (e.g., page description language (PDL) data) of a document file (electronic data) to be printed on the image forming apparatus 10. For this purpose, a printer driver corresponding to the image forming apparatus 10 is installed in the server 30. The print data generating unit 34 may correspond to a print job transmission unit.

The image forming apparatus 10 may include a user detection unit 121, a UI control unit 122, a print job information obtaining unit 123, a print job processing unit 124, and a user management table 125.

The user detection unit 121 detects a user allowed to use the print application 21 based on an advertisement issued by the server 30 and registers, for example, a user ID contained in the advertisement in the user management table 125. The user detection unit 121 may correspond to a receiving unit and a management unit. The user management table 125 is used to manage a list of users who are present on the network 40.

The UI control unit 122 receives user inputs such as a print request entered via a user interface such as the operations panel 15. Thus, although the print application 21 is located in the user device 20, a (final) print request for requesting execution of a print job can also be entered via the operations panel 15 of the image forming apparatus 10. The UI control unit 122 may correspond to a first display control unit and a second display control unit.

The print job information obtaining unit 123 obtains, from the server 30, print job information of a print job that is generated by the print application 21 and belongs to a user (user ID) selected from the users (user IDs) registered in the user management table 125. When multiple print jobs of a user are registered in the server 30, the print job information contains a list of the print jobs.

When a (final) print request is entered via the operations panel 15 of the image forming apparatus 10, the print job processing unit 124 obtains the corresponding print job from the server 30 and executes the print job (generates an image, prints the image on a recording medium, and ejects the recording medium).

The above described functional units are implemented by executing programs by the CPUs of the respective apparatuses (e.g., the CPU 111 and the CPU 204).

### <INFORMATION PROCESSING>

Exemplary information processing performed by the image forming system 1 including the user devices 20, the server 30, and the image forming apparatus 10 is described below.

### (REGISTRATION OF PRINT CLIENT INFORMATION)

An exemplary process of registering print client information is described below. In this exemplary process, the smart device 20a requests the server 30 to register print client information.

When the print application 21 is started on the smart device 20a, the print client information registration unit 212 transmits print client information to the server 30 and requests the server 30 to register the print client information. In this embodiment, respective users are identified as print clients. Therefore, the print client information registration unit 212 transmits print client information including, for example, a user name and a password to the server 30.

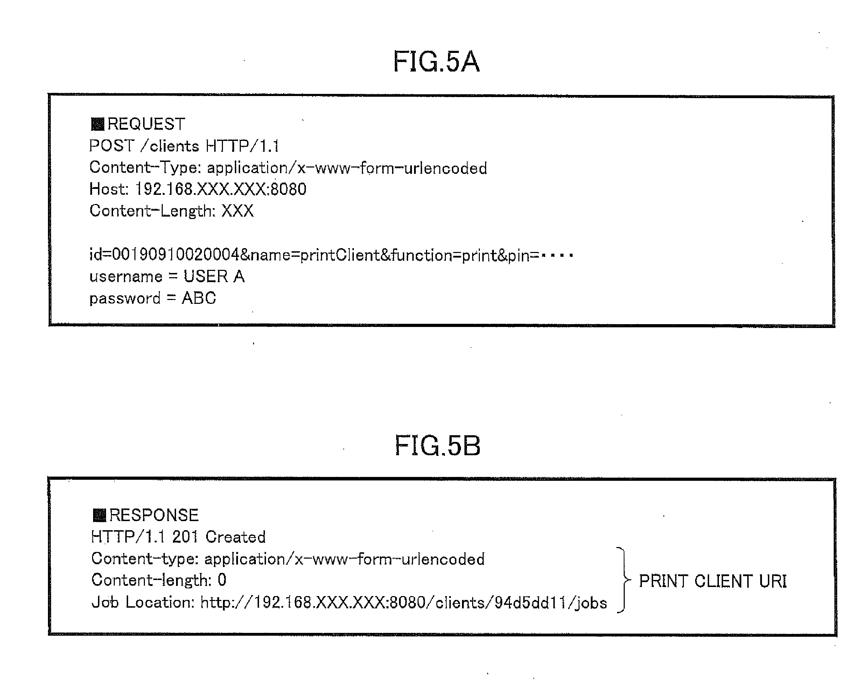

FIG. 5A is a drawing illustrating an exemplary configuration of a print client information registration request to be sent to the server 30 by, for example, the print client information registration unit 212. FIG. 5B is a drawing illustrating an exemplary configuration of a print client information registration response to be returned to the smart device 20a by, for example, the print client information management unit 31. As illustrated in FIG. 5A, the print client information registration request may include an IP address (Host) of the smart device 20a, an identifier (id) of the print application 21, a user name (username), and a password. Since the smart device 20a is normally used by one user, the user name and the password may be the same as those assigned to the smart device 20a.

As illustrated in FIG. 5B, the print client information registration response may include "Job Location". The Job Location is a Uniform Resource Identifier (URI) indicating a destination that is specified when a print job is transmitted to the server 30. In the URI, "94d5dd11" indicates a print client ID generated for the user specified in the print client information registration request.

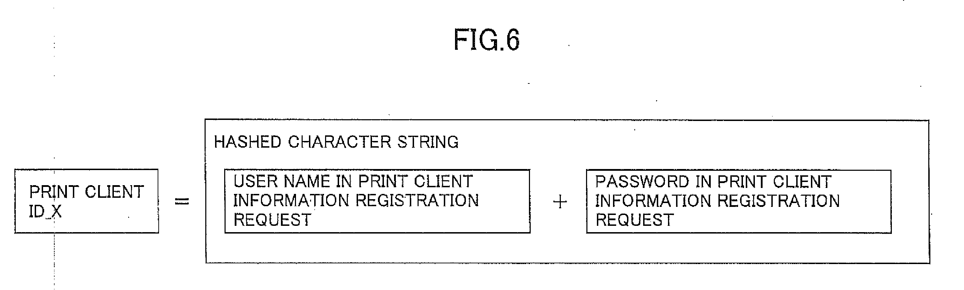

FIG. 6 is a drawing used to describe an exemplary method of generating a print client ID. When receiving a user name and a password from the smart device 20a, the server 30 combines the user name and the password and "hashes" the combined character string to generate a print client ID. Then, the server 30 includes the generated print client ID in the print client information registration response and sends the print client information registration response to the smart device 20a.

### (REGISTRATION OF PRINT JOB)

An exemplary process of registering a print job is described below. In this exemplary process, the smart device 20a requests the server 30 to register a print job.

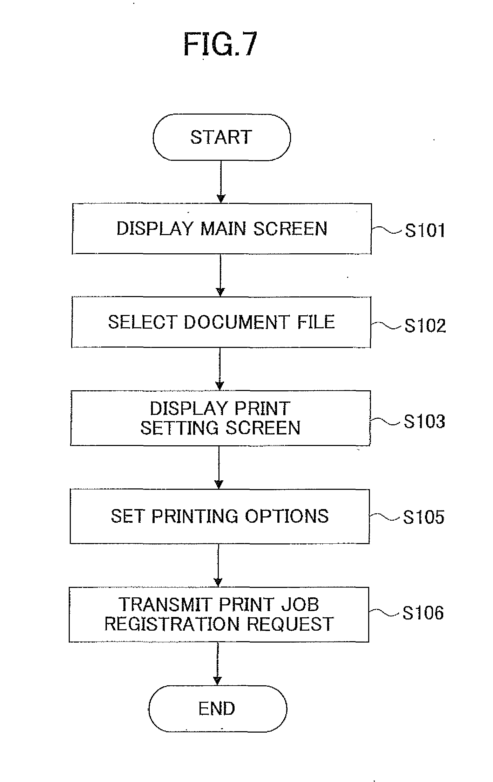

FIG. 7 is a flowchart illustrating a process of generating and transmitting a print job.

When the print application 21 (print widget) is started on the smart device 20a by the user, the UI control unit 211 displays a main screen of the print application 21 on the display unit 206 (S101). Next, the user selects a document file to be printed and the UI control unit 211 identifies the selected document file (S102). For example, the user may select a document file by dragging and dropping the corresponding document file icon onto the main screen of the print application 21.

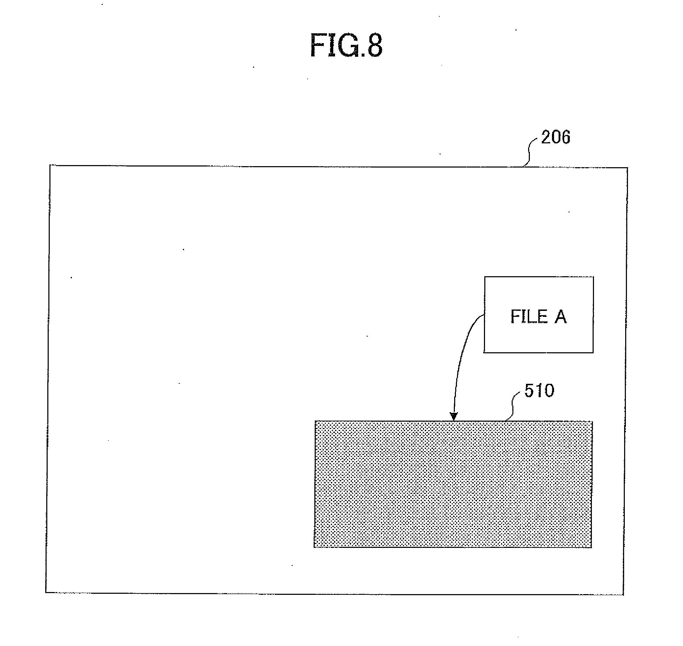

FIG. 8 is a drawing used to describe an exemplary method of selecting a document file. In this example, an icon of file A is dragged and dropped onto a main screen 510 displayed on the display unit 206. For brevity, the main screen 510 is represented by a simple rectangle. However, the main screen 510 may include components such as a tool bar and pull-down menus. Alternatively, the user may display a dialog box listing files on the file system of the smart device 20a by selecting a tool button or a menu item, and select a document file from the dialog box.

When a document file is selected by the user, the UI control unit 211 stores the file name and the file type (file format) of the selected document file in the memory 203. The file type may be determined based on the extension of the document file.

Next, the UI control unit 211 displays an icon representing the selected document file in the main screen 510 and also displays a print setting screen on the display unit 206 (S103).

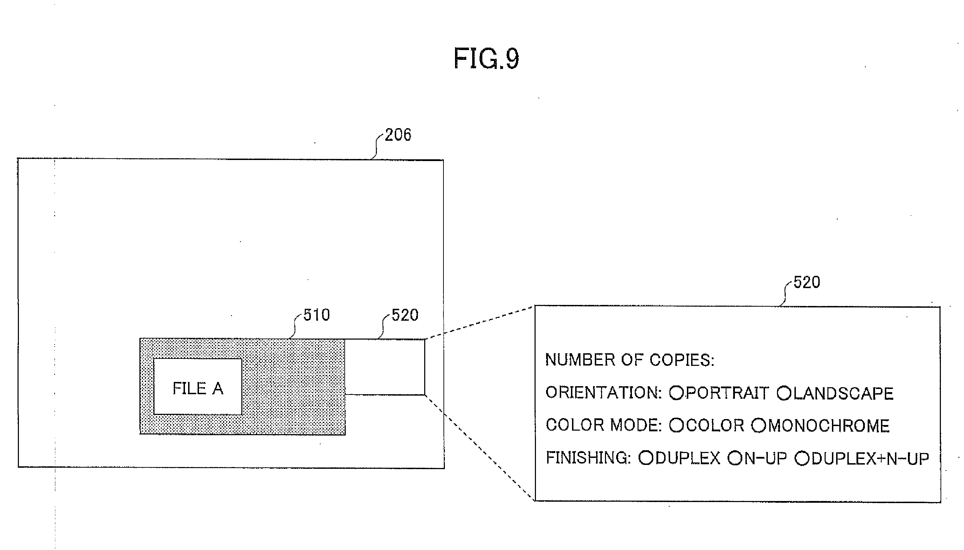

FIG. 9 is a drawing illustrating an exemplary print setting screen 520. In this example, the print setting screen 520 is displayed to the right of the main screen 510. Details of the print setting screen 520 are also illustrated on the right side of FIG. 9. In this example, the print setting screen 520 includes printing options such as "Number of Copies", "Orientation", "Color Mode", and "Finishing". However, these printing options are just examples and the print setting screen 520 may include printing options other than those described above.

When the user sets the printing options on the print setting screen 520, the UI control unit 211 stores the set printing options (printing parameters) in the memory 203 (S105).

Default values of the printing options displayed on the print setting screen 520 may be obtained from the attribute information management file 215. If the attribute information management file 215 includes desired print setting information (printing parameters) for the user, the print setting screen may not be displayed. In this case, the print setting information may be obtained from the attribute information management file 215 and loaded directly into the memory 203.

Based on the information obtained in the above steps, the print job registration unit 213 generates a print job (including print data and printing parameters) and transmits a print job registration request to the server 30 (S106). Here, it is assumed that information (e.g., an IP address or a host name) necessary to communicate with the server 30 is registered beforehand in the smart device 20a.

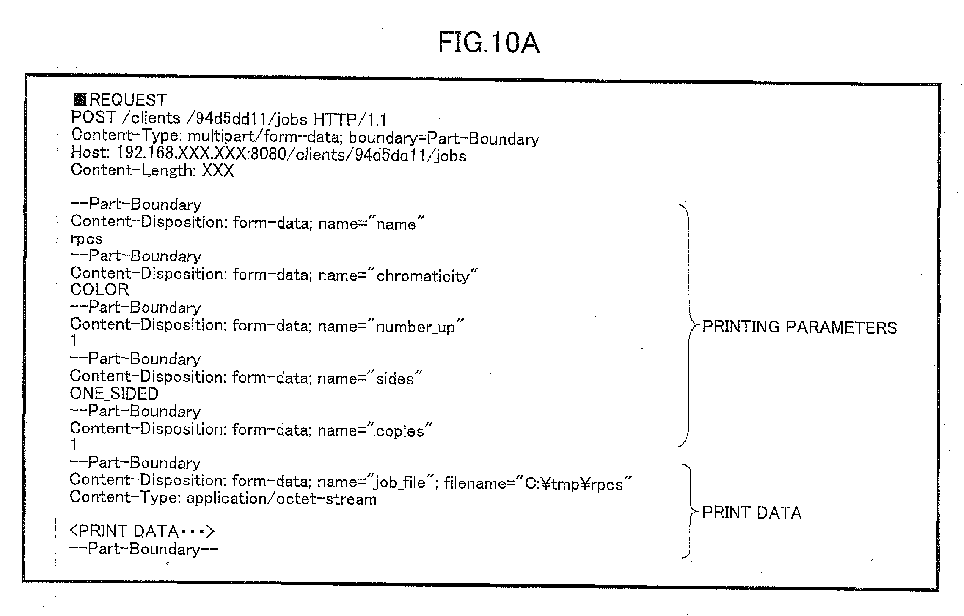

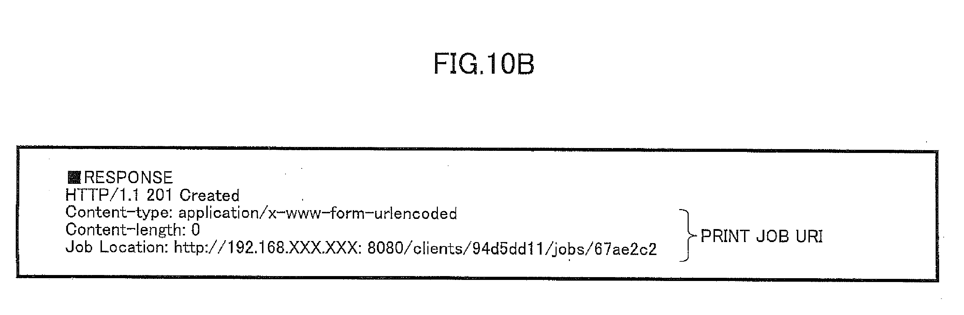

FIG. 10A is a drawing illustrating an exemplary configuration of a print job registration request to be transmitted to the server 30 by, for example, the print job registration unit 213. FIG. 10B is a drawing illustrating an exemplary configuration of a print job registration response to be returned to the smart device 20a by, for example, the print job management unit 33. As illustrated in FIG. 10A, the print job registration request may include print data and printing parameters. The print job registration request may also include, as a destination, a URI corresponding to the Job Location illustrated in FIG. 5B. As illustrated in FIG. 10B, the print job registration response may include "Job Location". The Job Location in the print job registration response is a URI indicating a location in the server 30 where the print job is registered.

As described above, the smart device 20a transmits print client information to the server 30 and requests the server 30 to register the print client information. In response, the server 30 registers the print client information in the print client information management table 35. Next, the smart device 20a transmits a print job to the server 30 and requests the server 30 to register the print job. Then, the server 30 registers the print job in the print job management table 36.

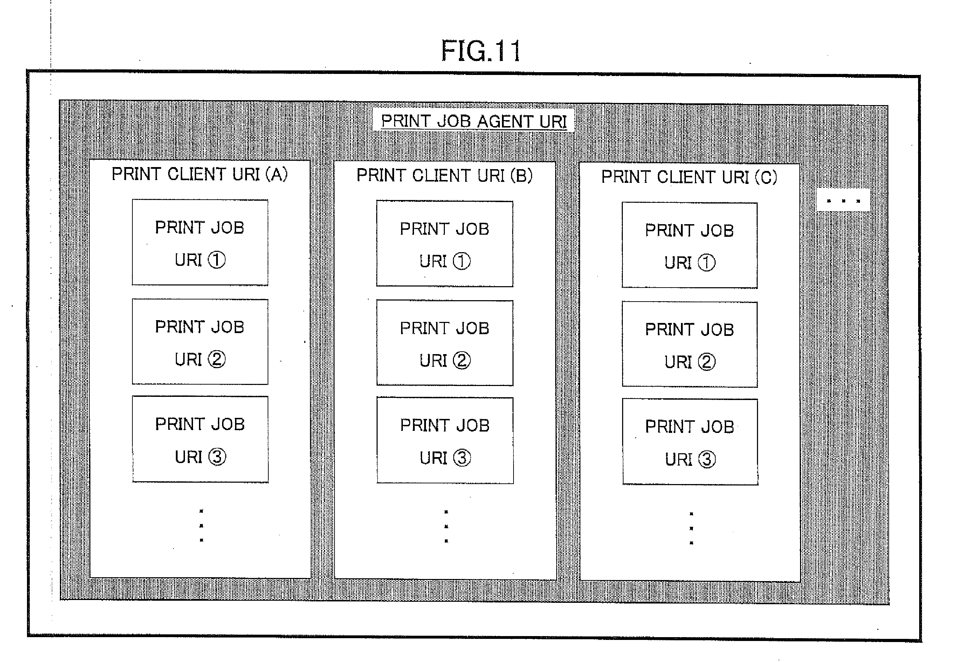

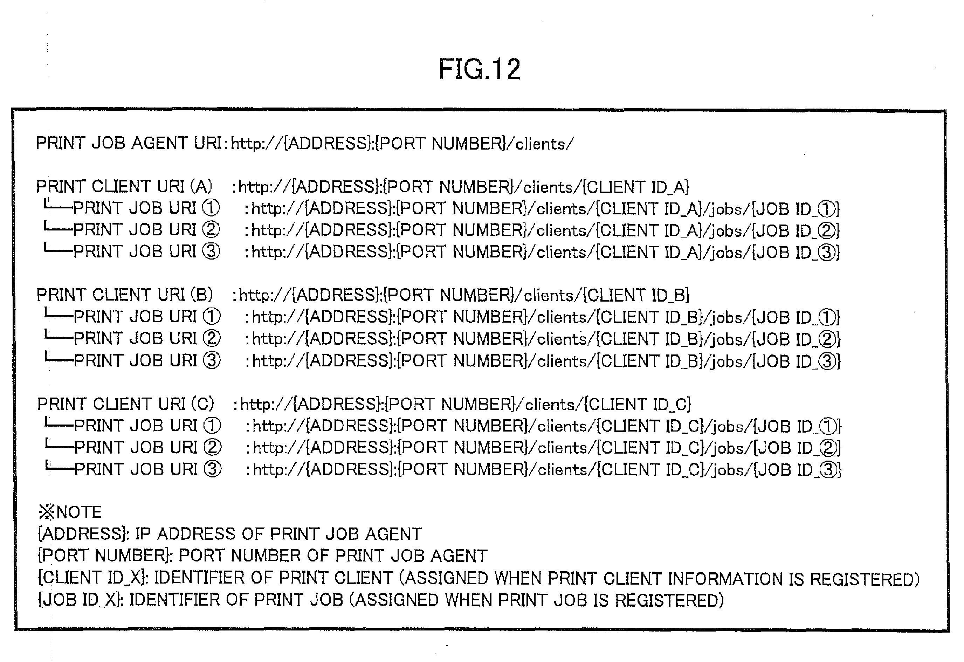

An exemplary method of managing print client information and print jobs at the server 30 is described below. FIG. 11 illustrates print jobs associated with print clients. FIG. 12 illustrates exemplary formats of URIs. As illustrated in FIG. 11, in the server 30, the print client information of print clients and print jobs are associated with each other using the print client information management table 35 and the print job management table 36. Also in this embodiment, as illustrated in FIG. 12, URIs are used to manage the correspondence between the print client information and the print jobs.

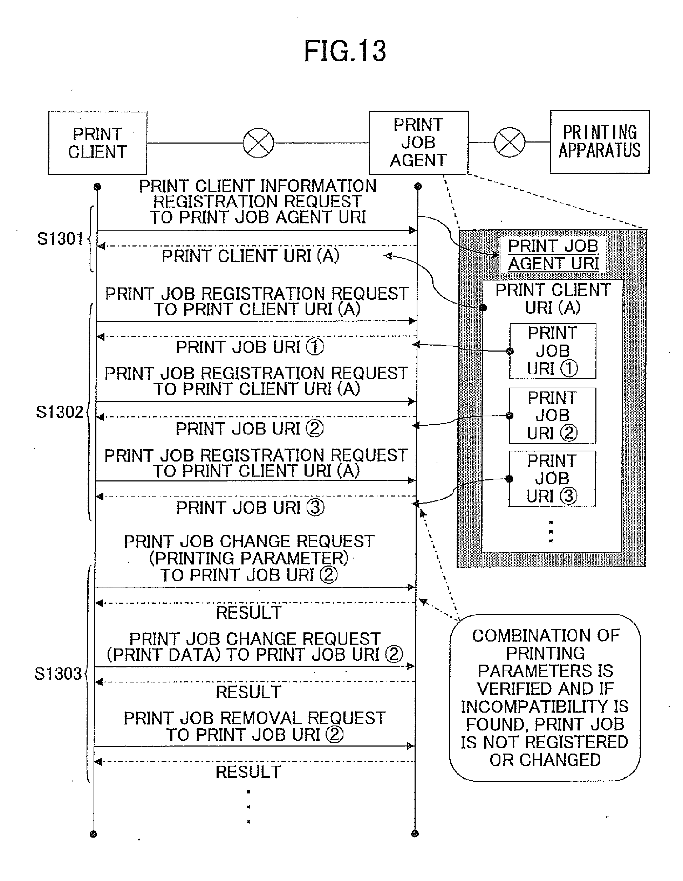

FIG. 13 is a sequence chart illustrating a process performed between a print client and a print job agent. In FIG. 13, a print client corresponds to the user device 20, a print job agent corresponds to the server 30, and a printing apparatus corresponds to the image forming apparatus 10. As illustrated in FIG. 13, when a print application is started, the print client transmits print client information to a print job agent URI (see FIGs. 11 and 12) and thereby requests the print job agent to register the print client information (S1301).

Also, the print client transmits print jobs to a print client URI (see FIGs. 11 and 12) and thereby requests the print job agent to register the print jobs (S1302). In this example, the print client transmits and requests registration of three print jobs. However, the number of print jobs is not limited to three.

The print client may also request the print job agent to change and remove registered print jobs using print job URIs (see FIGs. 11 and 12) (S1303).

### (ADVERTISEMENT)

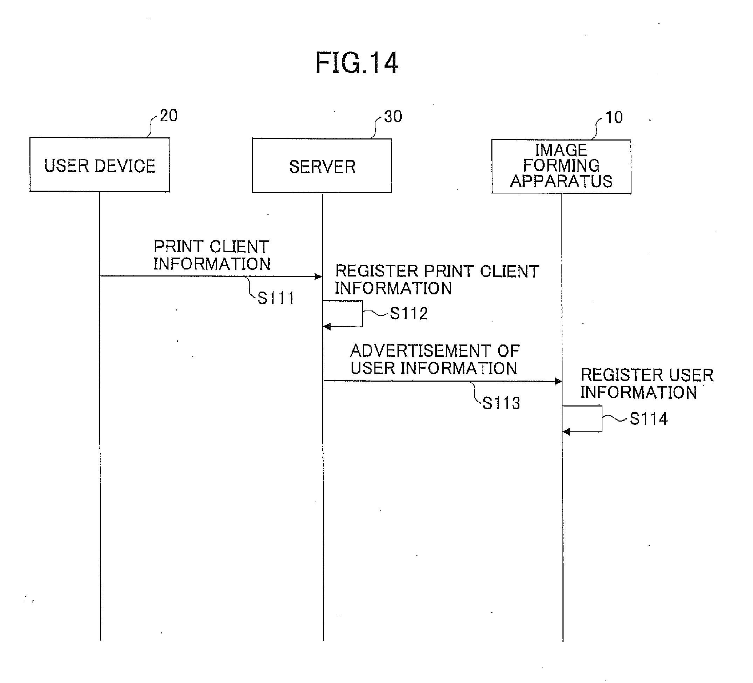

FIG. 14 is a sequence chart illustrating an exemplary process of registering print client information in the image forming apparatus 10. When the print application 21 is started, the smart device 20a (one of the user devices 20) transmits print client information to the server 30 (S111). The server 30 registers the print client information in the print client information management table 35 (S112).

Next, the advertising unit 32 of the server 30 advertises (broadcasts or multicasts) the print client information on the network 40 (S113). The advertisement is issued for each user (each user ID) and includes at least a user name and a print client URI.

When receiving the advertisement, the user detection unit 121 of the image forming apparatus 10 registers the user ID and the print client URI contained in the advertisement in the user management table 125 (S114).

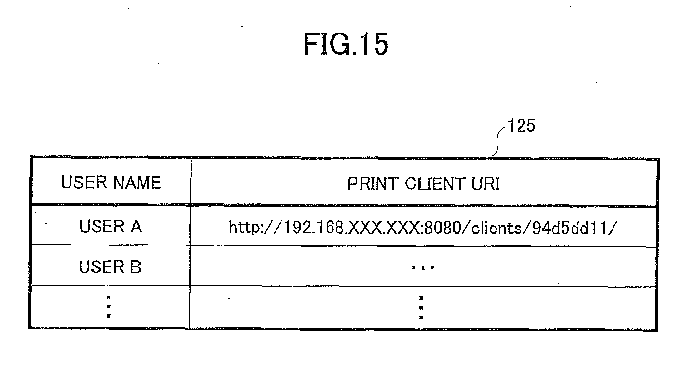

FIG. 15 illustrates an exemplary configuration of the user management table 125. As illustrated in FIG. 15, the user management table 125 stores pairs of user names and print client URIs. In this example, records for user A and user B are registered in the user management table 125. The user management table 125 is stored, for example, in the HDD 114.

In the user management table 125, one print client URI is registered for each user. Therefore, once print client information of a user is advertised, the print client information of the same user is not advertised again. As an example, let us assume a case where user A starts the print application 21 on the smart device 20a, the print client information of user A is registered in the server 30, the print client information of user A is advertised by the server 30, and user A is registered in the user management table 125. In this case, even if user A starts a print application on the PC 20b and the print client information of user A is transmitted to the server 30, the advertising unit 32 of the server 30 does not advertise the print client information of user A that has already been advertised.

### (SELECTION OF PRINT JOB)

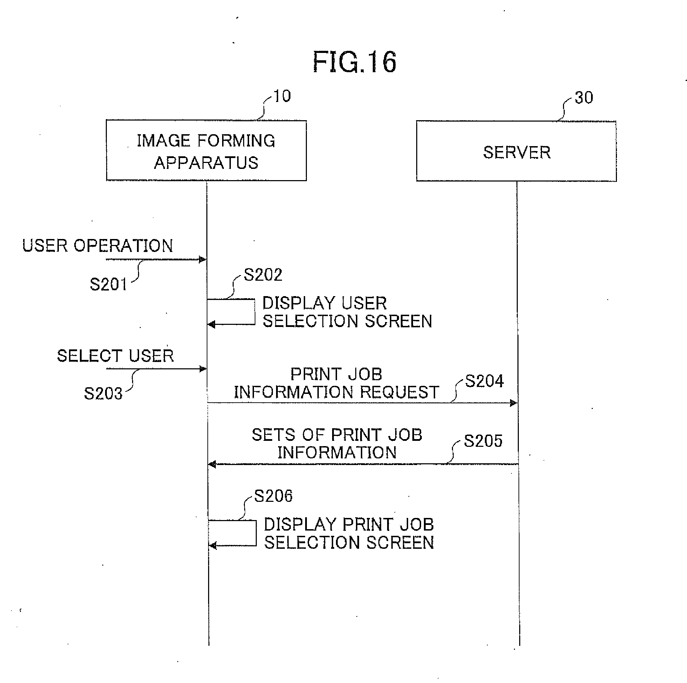

Next, a process performed according to user operations at the image forming apparatus 10 is described. FIG. 16 is a sequence chart illustrating a process of displaying a list of print jobs available for a user.

In response to a predetermined user operation input via the operations panel 15 (S201), the UI control unit 122 of the image forming apparatus 10 displays a user selection screen on the operations panel 15 based on information registered in the user management table 125 (S202).

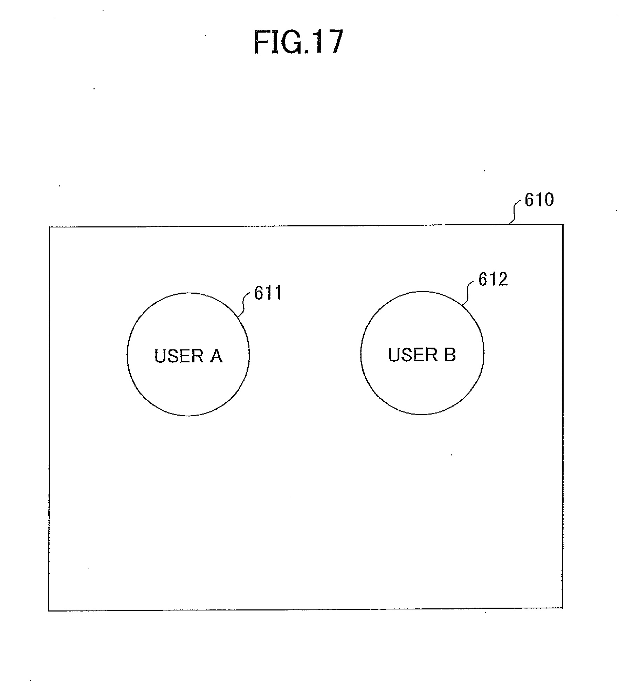

FIG. 17 illustrates an exemplary user selection screen 610. The user selection screen 610 includes buttons for respective user names. In this example, a button 611 for user A and a button 612 for user B are displayed on the user selection screen 610.

On the user selection screen 610, the user selects and presses one of the buttons with the corresponding user name (S203). The print job information obtaining unit 123 obtains the print client URI associated with the user name corresponding to the selected (or pressed) button from the user management table 125. Here, user authentication may be performed when a button corresponding to a user name is selected so that subsequent steps are performed only when the user is successfully authenticated.

Next, the print job information obtaining unit 123 transmits a print job information request to the obtained print client URI (S204). When receiving the print job information request, the print job management unit 33 of the server 30 retrieves all sets of print job information associated with the print client URI from the print job management table 36 and transmits the sets of print job information to the image forming apparatus 10 (S205). In other words, the print job management unit 33 sends, to the image forming apparatus 10, sets of print job information corresponding to the user currently operating the image formation apparatus 10.

Next, the UI control unit 122 of the image forming apparatus 10 stores the sets of print job information in the RAM 112 and displays a print job selection screen based on the sets of print job information (S206). The print job selection screen includes a list of print jobs registered for the user.

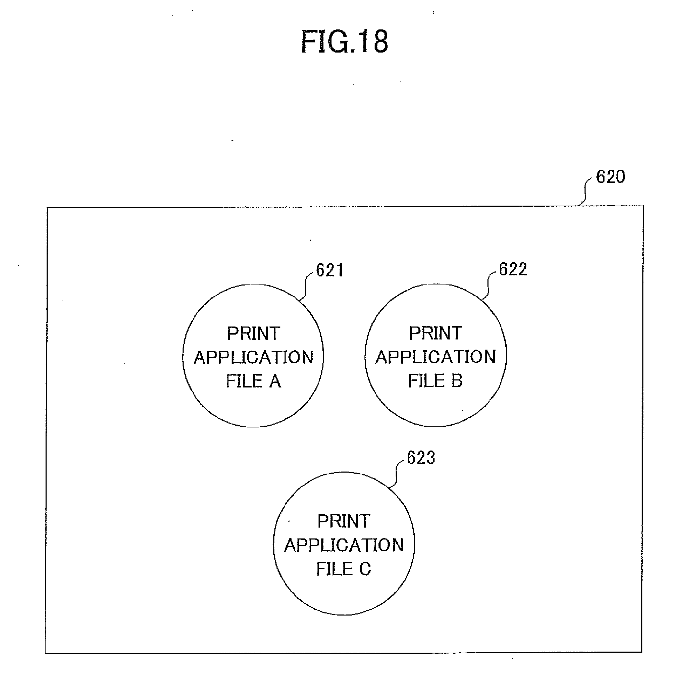

FIG. 18 is a drawing illustrating an exemplary print job selection screen 620. The print job selection screen 620 includes buttons for respective print jobs. In this example, the print job selection screen 620 includes a button 621 corresponding to a print request (print job) for a file A from the print application 21, a button 622 corresponding to a print request (print job) for a file B from the print application 21, and a button 623 corresponding to a print request (print job) for a file C from the print application 21. Thus, the print job selection screen 620 includes buttons for respective print requests (or print jobs) related to the print application 21.

When the user selects (or presses) one of the buttons, the corresponding print job is executed and a file or a document specified in the print job is output (printed) from the image forming apparatus 10. Each set of the print job information obtained from the server 30 may include detailed information on the print job such as printing parameters, a file name of print data, the application name of the print application 21, and information for identifying the print client (e.g., the name or identifier of the smart device 20a). Including the detailed information on the print job in the print client information (or the print client information registration request) or in the print job information (or the print job registration request) makes it possible to view the detailed information, for example, on a property dialog box (not shown) of the print job selection screen 620. When no print job is registered for the selected user, "null" is returned as the print job information from the server 30 and no button is displayed on the print job selection screen 620.

Referring again to FIG. 17, the user selection screen 610 includes buttons for respective user names. This indicates that the print client information is managed for each user name (or user). Therefore, even if a user operates print applications both on the smart device 20a and the PC 20b, only one button is displayed for the user on the user selection screen 610. In other words, even if a user registers print jobs using print applications on the smart device 20a and the PC 20b, the user can display the print jobs registered from the smart device 20a and the PC 20b on the print job selection screen 620 by selecting a button corresponding to its user name on the user selection screen 610. This configuration enables the user to register print jobs generated using multiple user devices 20 in the same server 30 and to execute the print jobs on the image forming apparatus 10.

### (EXECUTION OF PRINT JOB)

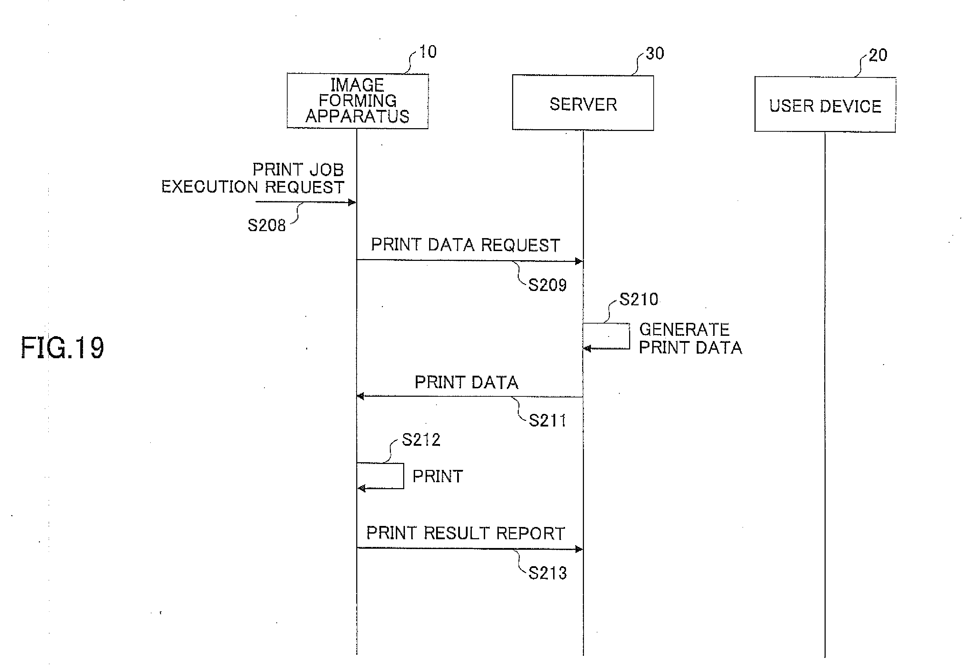

An exemplary process of executing a print job is described below. FIG. 19 is a sequence chart illustrating a process of executing a print job.

When the user selects one of the buttons on the print job selection screen 620 and presses a start key on the operations panel 15, a print job execution request is input to the image forming apparatus 10 (S208). When receiving the print job execution request, the print job processing unit 124 of the image forming apparatus 10 transmits a print data request to the print job URI of the print job corresponding to the selected button and thereby requests the server 30 to send print data (S209). The print data request may include information indicating a printer description language (or a page description language) supported by the image forming apparatus 10.

The print data request sent to the print job URI is received by the print job management unit 33. The print job management unit 33 refers to the print job management table 36 and obtains a print job corresponding to the print job URI. The print data generating unit 34 obtains a document file corresponding to the print job from the secondary storage unit 202 and generates print data of the document file (S210).

More specifically, the print data generating unit 34 generates the print data of the document file using a printer driver corresponding to a printer description language specified in the print data request. Then, the print data generating unit 34 transmits the generated print data to the image forming apparatus 10 (S211). This configuration eliminates the need for the user device 20 (particularly the portable smart device 20a that generally includes a small amount of memory) to store the printer driver for the image forming apparatus 10. In other words, this configuration makes it possible to improve the usability and save the memory of the user device 20. The server 30 may include printer drivers corresponding to various image forming apparatuses on the network to be able to generate print data for the respective image forming apparatuses.

When receiving the print data from the server 30, the print job processing unit 124 prints the print data (S212). More specifically, the print job processing unit 124 causes the printer 13 to generate a print image based on the print data and transfer the print image onto a recording medium such as paper. Then, the print job processing unit 124 sends a print result report to the server 30 (S213). When receiving the print result report, the print job management unit 33 of the server 30 refers to the print job management table 36 and removes the corresponding print job or puts a print-completion flag on the print job.

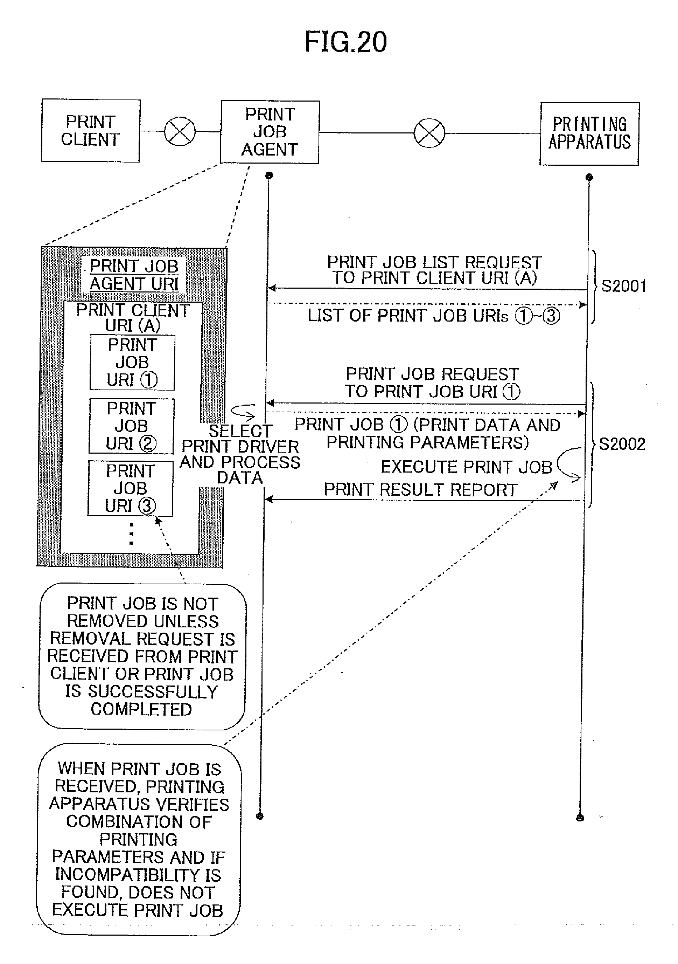

FIG. 20 is a sequence chart illustrating a process performed between a print job agent and a printing apparatus. In FIG. 20, a print client corresponds to the user device 20, a print job agent corresponds to the server 30, and a printing apparatus corresponds to the image forming apparatus 10. The printing apparatus obtains a list of print jobs (sets of print job information) from the print job agent based on a print client URI corresponding to a selected user (S2001).

Next, based on a print job URI corresponding to a selected print job, the printing apparatus obtains the print job (print data and print parameters) from the print job agent and executes the print job (S2002).

As described above, an aspect of this disclosure provides an image forming system, a server, an image forming apparatus, and a storage medium storing a program that make it possible to prevent or reduce one or more problems caused by the limitations and disadvantages of the related art and thereby to improve the usability of smart devices in printing.

The present invention is not limited to the specifically disclosed embodiments, and variations and modifications may be made without departing from the scope of the present invention. The above described embodiments may also be applied to a method, a system, a computer program, and a storage medium storing the computer program.

## Claims

1. An image forming system, comprising:
a smart device including a print application;
a server; and
an image forming apparatus,
wherein the smart device, the server, and the image forming apparatus are connected to each other via a network;
wherein the server includes
a print client information receiving unit configured to receive print client information from the print application of the smart device,
a print client information management unit configured to register and manage the received print client information,
an advertising unit configured to advertise the registered print client information to the image forming apparatus,
a print job receiving unit configured to receive a print job from the print application of the smart device,
a print job management unit configured to register and manage the received print job in association with the print client information, and
a print job transmission unit configured to transmit the print job to the image forming apparatus in response to a request from the image forming apparatus.

2. The image forming system as claimed in claim 1, wherein the image forming apparatus includes
a display unit;
a receiving unit configured to receive the print client information advertised by the advertising unit of the server;
a management unit configured to obtain a print client identifier from the received print client information and to register and manage the obtained print client identifier;
a first display control unit configured to display a first operation component associated with the registered print client identifier on the display unit;
a print job information obtaining unit configured to obtain print job information of the print job from the server based on the print client identifier associated with the first operation component when the first operation component is selected;
a second display control unit configured to display a second operation component associated with the obtained print job information on the display unit;
a print job obtaining unit configured to obtain the print job from the server based on the print job information associated with the second operation component when the second operation component is selected; and
a print execution unit configured to execute the obtained print job.

3. The image forming system as claimed in claim 2, wherein
the print client information includes a user identifier of a user using the print application as the print client identifier; and
the first display control unit is configured to display the first operation component associated with the user identifier.

4. The image forming system as claimed in claim 2 or 3, wherein the print job transmission unit is configured to generate print data comprehensible to the image forming apparatus when the print job is requested by the image forming apparatus and to transmit the print job including the generated print data.

5. The image forming system as claimed in any one of claims 2 through 4, wherein
the print client information management unit is configured to transmit a print client URI corresponding to the print client information to the smart device; and
the smart device is configured to transmit the print job to the server using the print client URI as a destination.

6. The image forming system as claimed in any one of claims 2 through 5, wherein
the print job management unit is configured to transmit a print job URI to the smart device, the print job URI indicating a location in the server where the print job is registered.

7. A non-transitory computer-readable storage medium storing program code for causing a server connected via a network to a smart device and an image forming apparatus to perform a method comprising:
receiving print client information from a print application of the smart device;
registering and managing the received print client information;
advertising the registered print client information to the image forming apparatus;
receiving a print job from the print application of the smart device;
registering and managing the received print job in association with the print client information; and
transmitting the print job to the image forming apparatus in response to a request from the image forming apparatus.

8. A non-transitory computer-readable storage medium storing program code for causing an image forming apparatus connected via a network to a smart device and a server to perform a method comprising:
receiving print client information advertised by the server;
obtaining a print client identifier from the received print client information and registering and managing the obtained print client identifier;
displaying a first operation component associated with the registered print client identifier on a display unit of the image forming apparatus;
obtaining print job information of a print job from the server based on the print client identifier associated with the first operation component when the first operation component is selected;
displaying a second operation component associated with the obtained print job information on the display unit;
obtaining the print job from the server based on the print job information associated with the second operation component when the second operation component is selected; and
executing the obtained print job.
